# EUROPEAN PATENT SPECIFICATION

(11) **EP 2 187 022 B1**
(45) Date of publication and mention of the grant of the patent: **30.11.2016**
(21) Application number: 08834209.2
(22) Date of filing: 24.09.2008
(51) Int. Cl.: F02C 7/18, F01D 25/12, F23R 3/06, F23R 3/28, F23R 3/42, F23R 3/00

(54) **COOLING STRUCTURE FOR GAS-TURBINE COMBUSTOR**
KÜHLSTRUKTUR FÜR EINEN GASTURBINENBRENNER
STRUCTURE DE REFROIDISSEMENT POUR UNE CHAMBRE DE COMBUSTION DE TURBINE À GAZ

(30) Priority: 25.09.2007 JP 2007247224
(43) Date of publication of application: 19.05.2010
(73) Proprietor: Mitsubishi Hitachi Power Systems, Ltd., Yokohama 220-8401 (JP)
(72) Inventor: ISHIGURO, Tatsuo, Takasago-shi Hyogo 676-8686 (JP); TANAKA, Katsunori, Takasago-shi Hyogo 676-8686 (JP); MIYAUCHI, Kotaro, Takasago-shi Hyogo 676-8686 (JP)
(74) Representative: Henkel, Breuer & Partner
(86) International application number: PCT/JP2008/067188
(87) International publication number: WO 2009/041435

(56) References cited:
- EP-A2- 1 813 869
- JP-A- 3 221 720
- JP-A- 55 099 526
- JP-A- H03 221 720
- JP-A- 2000 145 479
- JP-A- 2002 242 702
- JP-A- 2004 044 538
- JP-A- 2004 092 409
- JP-A- 2005 105 817
- US-A1- 2001 027 653
- US-B1- 6 282 905

## Description

### Technical Field

The present invention relates to a cooling structure of a gas turbine combustor.

### Background Art

There is a demand of effective cooling means for a combustor for a gas turbine since the gas turbine combustor arises to a high temperature. In addition, there is another demand of a combustor that can reduce NOx for environment problem.

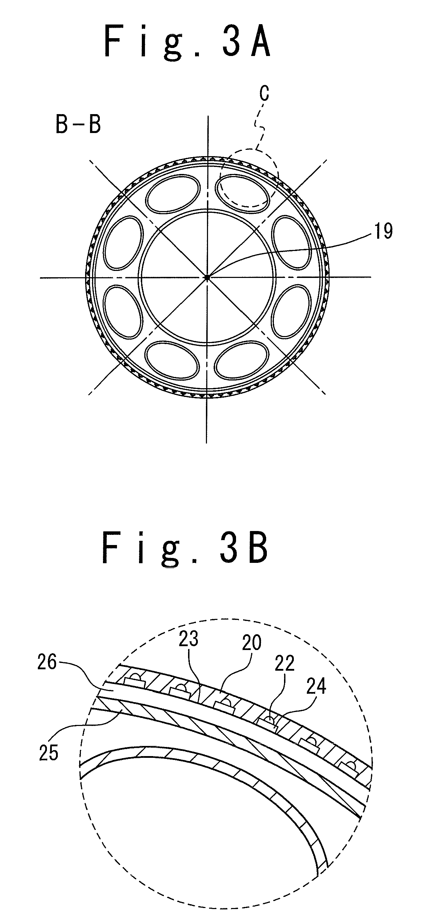

In JP P2005-315457A (first conventional example), a cooling structure of a gas turbine combustor is shown in FIGS. 3 to 6, in particular.

US 6282905B1 discloses a gas turbine combustor with a combustion tube that has an inner wall surface faced to a combustion zone and an outer wall surface and a plurality of cooling passages formed between the inner and outer wall surfaces. Cooling air is supplied along the inner wall surface in that it is introduced through coolant supply openings in the outer wall surface into the cooling passages and the cooling air is subsequently ejected from the cooling passages through coolant supply openings located at the inner wall surface at various locations along the length of the cooling passages. A cover is provided at an outlet portion of a coolant supply opening so that air flowing out of the coolant supply opening into the tail tube is re-directed in the combustion gas flow direction along the inner wall surface.

JP H03-221720A discloses a gas turbine combustor with a combustion tube that has an inner wall surface faced to a combustion zone and an outer wall surface and a plurality of cooling passages formed between the inner wall surface and the outer wall surface. Said document discloses the preamble of claim 1.

US 2001/0027653A1 discloses a gas turbine combustor which has a seal ring for preventing cooling air from passing through a space between a heat insulating member and a shell of the combustor so that all of cooling air introduced from cooling air inlet holes flows through a cooling air passage in the heat insulating member. The space is alternatively sealed by attaching an outer circumference of the heat insulating member to the shell at an inlet of the cooling air passage by brazing.

### Disclosure of the Invention

It is an object of the present invention to provide a gas turbine combustor capable of reducing NOx.

It is another object of the present invention to provide a technique suitable to efficiently cool a wall surface of a gas turbine combustor.

A gas turbine combustor according to the present invention includes the features of claim 1. Preferred embodiments are defined in the dependent claims.

According to one embodiment of the present invention, the guide guides the coolant in a downstream direction from a position of a nozzle supplying fuel toward a tail tube connected to the combustion tube on an axis of the combustion tube.

According to one embodiment of the present invention, the plurality of main coolant supply openings supply the coolant into an inside of the combustion tube in a radial direction.

According to one embodiment of the present invention, the plurality of main coolant supply openings are provided on downstream ends of the plurality of cooling passages in a flow direction of the coolant, respectively.

The gas turbine combustor according to one embodiment of the present invention further includes the spacer preventing the gap from narrowing arranged downstream of the plurality of auxiliary coolant supply openings in the flow direction of the coolant supplied from the plurality of auxiliary coolant supply openings. The plurality of main coolant supply ports are arranged downstream of the spacer.

The gas turbine combustor according to the present invention further includes the spacer preventing the gap from narrowing arranged downstream of the plurality of main coolant supply openings in the flow direction of the coolant supplied from the plurality of main coolant supply openings. The plurality of auxiliary coolant supply openings are arranged downstream of the spacer.

The gas turbine combustor according to one embodiment of the present invention further includes a cavity to which the plurality of auxiliary coolant supply openings are opened. The coolant supplied from the coolant supply openings is supplied to the gap via the cavity. A flow rate of the coolant in the cavity is lower than a flow rate of the coolant in the gap.

According to one embodiment of the present invention, the combustion tube includes a bulge section. The bulge section is arranged upstream of a predetermined position set upstream of the plurality of main coolant supply openings in a main flow direction of the fuel in the combustion zone, and projects into the side opposite to the combustion region. The guide is substantially flat in the main flow direction near the predetermined position. The cavity is formed in a region between the inner wall surface and the guide in the bulge section. The gap is formed by a region between the inner wall surface downstream of the predetermined position in the main flow direction and the guide.

The present invention provides the gas turbine combustor capable of reducing NOx. Furthermore, the present invention provides technique adapted to efficiently cool a tube wall of a gas turbine combustor.

### Brief Description of the Drawings

FIG. 1 shows a gas turbine combustor;
FIG. 2 is a cross sectional side view showing a combustion tube and neighborhoods of the combustion tube;
FIG. 3A is a cross sectional view showing the combustion tube and neighborhoods of the combustion tube in a direction perpendicular to a central axis;
FIG. 3B is a partially enlarged view of FIG. 3A;
FIGS. 4A and 4B are a cross sectional view and a top view, respectively showing a wall surface near a location at which the main nozzle is disposed;
FIGS. 5A and 5B are a cross sectional view and a top view, respectively showing a wall surface near a location at which the main nozzle is disposed;
FIGS. 6A and 6B are a cross sectional view and a top view, respectively showing a wall surface near a location at which the main nozzle is disposed;
FIGS. 7A and 7B are a cross sectional view and a top view, respectively according to the invention showing a wall surface near a location at which the main nozzle is disposed;
FIGS. 8A and 8B are a cross sectional view and a top view, according to the invention showing a wall surface near a location at which the main nozzle is disposed;
FIG. 9 is a cross sectional view showing a wall surface near a location at which the main nozzle is disposed; and
FIG. 10 is a cross sectional view showing a wall surface near a location at which the main nozzle is disposed.

### Best Mode for Carrying Out the Invention

Hereinafter, embodiments of the present invention and examples serving to explain features of the invention will be described with reference to the attached drawings.

### [First Example]

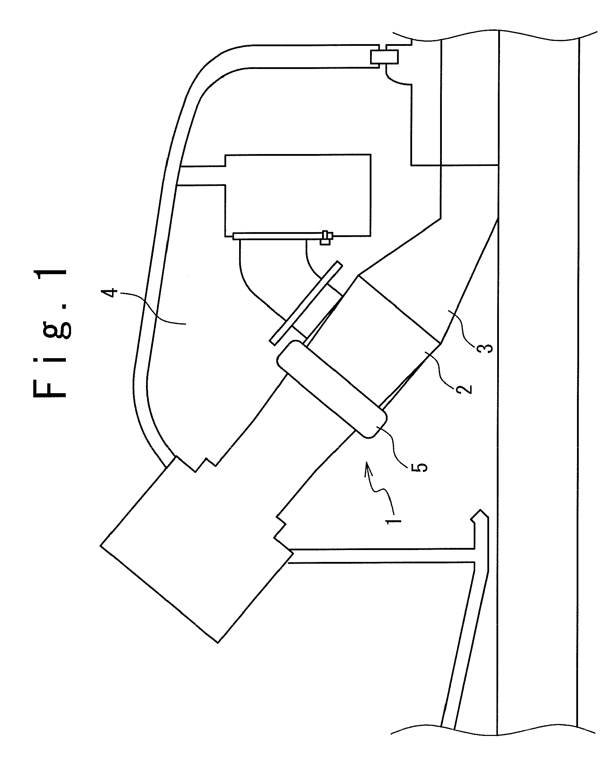

FIG. 1 shows a combustor 1 of a gas turbine. The combustor 1 is disposed within a wheel chamber 4 defined by a wheel chamber wall. The combustor 1 includes a combustor tube 2 in which a combustion zone is formed and a tail tube 3 connected to a downstream side (a side closer to the turbine) of the combustion tube 2.

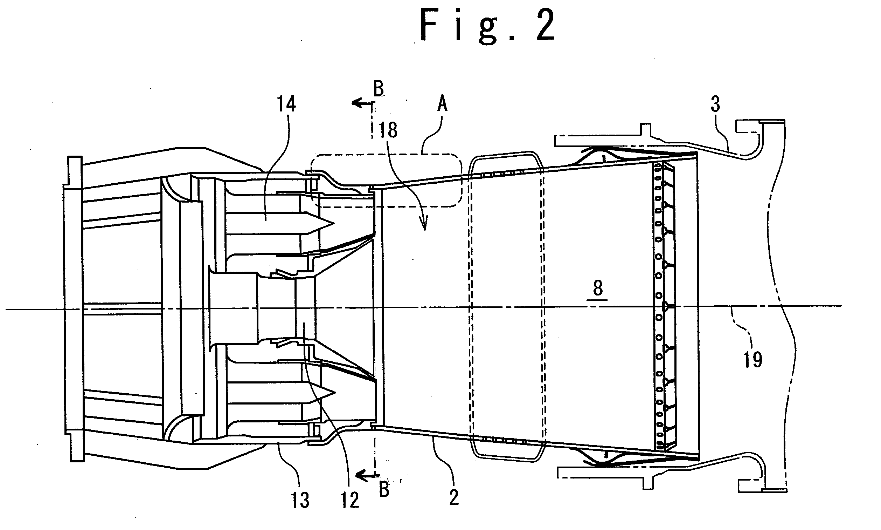

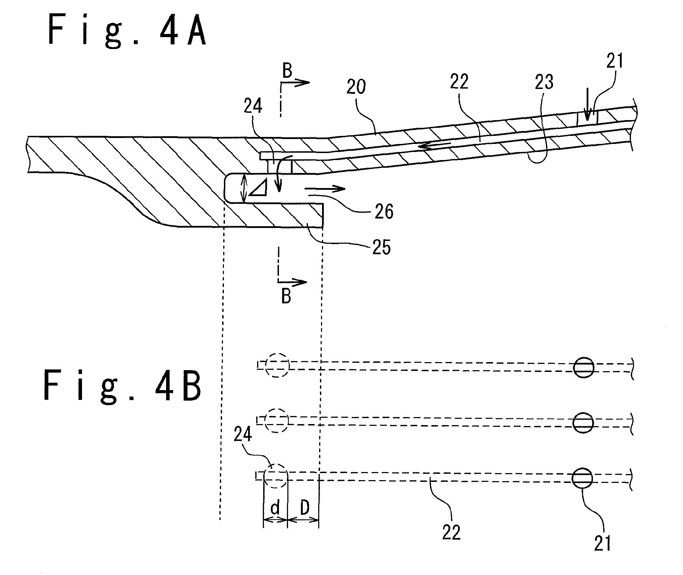

FIG. 2 is a cross sectional view of the combustor 1 in neighborhood of the combustion tube 2. An inner space of the combustion tube 2 is a combustion zone 8. A pilot nozzle 12 is provided on a central axis of a substantially cylindrical nozzle holding tube 13 (which axis coincides with a central axis 19 extending in a direction connecting an upstream side to a downstream side of the combustion tube 2) on the upstream side of the combustion tube 2. A plurality of main nozzles 14 are provided to surround the pilot nozzle 12 on a circle having a predetermined radius from the central axis 19. FIG. 3A shows a B-B cross section of FIG. 2 and FIG. 4A to be described later. FIG. 3B is an enlarged view showing a wall surface of the combustion tube 2 and neighborhood of the wall surface.

FIGS. 4A and 4B show the wall surface of the combustion tube 2 near a portion in which each of the main nozzles 14 is provided. FIG. 4A is a cross sectional view. A plurality of cooling passages 22 through which the air acting as coolant passes are provided between an inner wall surface 23 facing the combustion zone 8 and an external wall surface 20 facing the wheel chamber. That is, the wall surface has a double-wall structure in which the cooling passages 22 are provided. FIG. 4B is a top view showing arrangement of the cooling passages 22 from a viewpoint in a direction perpendicular to the wall surface. The plurality of cooling passages 22 is arranged to extend in a direction parallel to a main flow direction of combustion gas of the combustor, that is, a direction almost parallel to the central axis 19. Each of the cooling passages 22 is connected to a coolant inlet opening 21 that is open to the wheel chamber 4 at a predetermined position. One end of each of the plurality of cooling passages 22 is open to a coolant supply opening 24 provided in the inner wall surface 23. The coolant supply opening 24 is also referred to as a "main coolant supply opening" when being compared with an auxiliary coolant supply port to be described later. The coolant supply opening 24 is positioned upstream of the coolant inlet opening 21 in the main flow direction of the combustion gas and is closer to the main nozzle 14. From another standpoint, since the flow of the coolant in each cooling passage 22 is in a direction from the coolant inlet opening 21 to the coolant supply opening 24, the coolant supply opening 24 is open to a gap 26 near a downstream end of the flow of the coolant in each cooling passage 22.

The side of the combustion zone 8 of the coolant supply opening 24 is covered with a guide 25 via the gap 26. The guide 25 is a member fixed to the wall surface of the combustion tube 2. As shown in FIG. 3B, the guide 25 is arranged along the interior of the outer wall surface 20 having the central axis 19 as a center (typically, on a circle around the central axis 19). The guide 25 closes an upstream side of the gap 26. A downstream side of the gap 26 is open and communicates with the combustion zone 8 at a position near the inner wall surface 23. This guide 25 is provided to introduce the coolant downstream. More specifically, with respect to the central axis of the combustion tube 2 which is almost rotation symmetry, the guide 25 introduces the coolant downstream in the axial direction from a position at which nozzles for supplying the fuel are provided to the tail tube.

The height of the gap 26 between the guide 25 and the inner wall surface 23 is assumed as Δ. The coolant supply opening 24 is assumed to be a circle having a diameter d. A length from a downstream end of the coolant supply opening 24 to a downstream end of the guide 25 in a direction parallel to the central axis 19 is assumed as D. It is preferable to satisfy Δ < d and D > d in order to form good film air.

During operation of the gas turbine, a compressor supplies compressed air to the wheel chamber 4. A part of the compressed air is supplied for combustion of the fuel in the combustion zone 8. The other part of the compressed air is introduced from the coolant inlet openings 21 into the cooling passages 22 by using a pressure difference. A temperature of a combustion wall is high since the combustion tube wall is in contact with the combustion zone 8. By making the air to flow through the cooling passages 22 as coolant, the combustion wall is cooled. The air passing through the cooling passages 22 is supplied from the coolant supply openings 24 to the gap 26. A flow direction of the air in each coolant supply opening 24 is a radially inward direction of a cross section perpendicular to a central axis of a cylindrical shape around the central axis 19. The guide 25 introduces the air supplied to the gap 26 in a direction along the inner wall surface 23. The inner wall surface 23 is subjected to film cooling by this air.

By this configuration, the air passing through the cooling passages 22 and used to cool the interior of the tube wall is collected and also used for the film cooling. By efficiently using the air for cooling ("cooling air"), the cooling air can be saved and the air resulting from the saving of the cooling air can be used as the air for combustion ("combustion air"). Through increase in the combustion air, NOx generation can be suppressed.

It is necessary to secure the film air of a predetermined flow rate in order to prevent flashback from occurring in the combustor 1 during gas firing using the gas as the fuel of the combustor 1 or to prevent oil fuel used during oil firing using oil as the fuel from remaining on the wall surface. If the air necessary for the film cooling is more than minimal cooling air necessary for cooling the tube wall by the cooling passages 22, more cooling air than the minimal air can flow through the cooling passages 22 and reliability of the combustor can be further improved. Even in this case, the combustion air does not decrease.

Moreover, in the process of using the air for cooling the tube wall, the temperature of the air rises and density thereof decreases. Due to this, as compared with direct supply of the air in a same amount from the wheel chamber, the flow rate of the film air is high and a dynamic pressure of the film can be increased, even if an area of each coolant supply opening 24 for the film cooling is the same. If the dynamic pressure of the film air is high, it is particularly possible to prevent the oil from remaining on the inner wall surface 23.

A cooling structure of the coolant inlet openings 21, the cooling passages 22, the coolant supply openings 24 and the guide 25 shown in FIGS. 4A and 4B is effective even if the cooling structure is provided for any tube wall of the combustion tube. In particular, a temperature of the wall surface of a region close to the main nozzles is high. Therefore, it is effective to provide the cooling structure in a position close to the main nozzles, that is, a position close to an upstream end of the combustion zone 8.

### [Second Example]

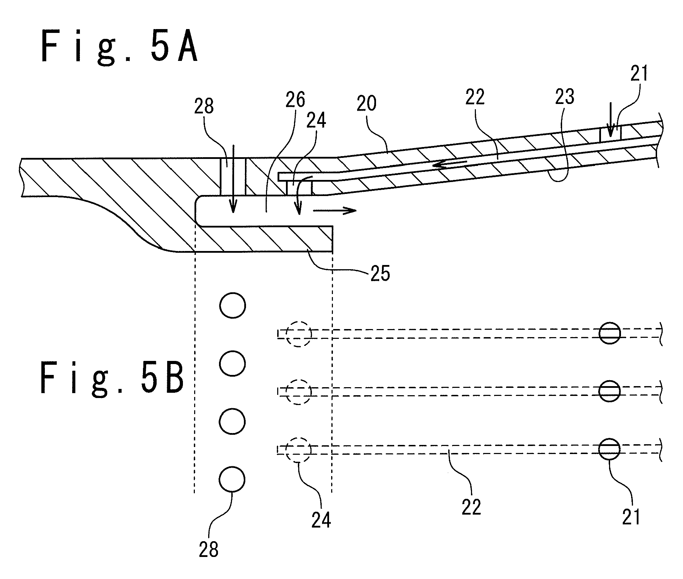

The gas turbine combustor according to a second example serving to explain features of the present invention differs from that of the first example in a configuration of a wall surface near a location of the combustion tube 2 in which the main nozzles 14 are provided. FIGS. 5A and 5B show the configuration. FIG. 5A is a cross sectional view. The cooling structure according to the present example includes auxiliary coolant supply openings 28 in addition to the coolant inlet openings 21, the cooling passages 22, the coolant supply openings 24 and the guide 25 similarly to the first example. The auxiliary coolant supply openings 28 directly supply the compressed air in the wheel chamber 4 to the gap 26 formed by the guide 25.

FIG. 5B is a top view showing an arrangement of the cooling passages 22 in a direction perpendicular to the wall surface. The auxiliary coolant supply openings 28 are open to the gap 26 upstream of the coolant supply openings 24. The coolant supply openings 24 and the auxiliary coolant supply openings 28 are arranged in positions shifted from one another by a half-pitch in a circumferential direction perpendicular to a main flow direction of cooling air, that is, in a direction parallel to the central axis 19 and perpendicular to a direction from an upstream side on which the main nozzles 14 and the pilot nozzle 12 are provided to a downstream side on which the tail tube 3 is connected (or a flow direction of coolant guided by the guide 25). In an example of FIG. 5B, the coolant supply openings 24 and the auxiliary coolant supply openings 28 are alternately arranged in the circumferential direction of the combustion tube.

During driving of a gas turbine, the compressed air of the wheel chamber is introduced into the combustion tube 2 via the coolant inlet openings 21, the cooling passages 22 and the coolant supply openings 24. The guide 25 supplies the compressed air into a region along the inner wall surface 23 on the downstream side. A film formed by this air has a spotted distribution resulting from a pitch of the cooling passages 22. Each of the auxiliary coolant supply openings 28 supplies auxiliary film air into a region in which a density of the film air supplied from each coolant supply opening 24 is low and can make flow rate variation uniform at an outlet of the film. Since the uniform film can be formed, it is possible to realize a high film efficiency and prevent flashback and residence of oil.

Such a configuration is particularly suited in a case that an amount of the cooling air collected as the film air from the cooling passages 22 is smaller than an amount necessary as the film air. The air added as the film is air necessary for the film and the air in an excessive amount is unnecessary. Since a part of the film air is the air recycled after collecting the air used for cooling a combustor wall, the cooling air can be saved. Thus, it is possible to secure the combustion air and reduce NOx.

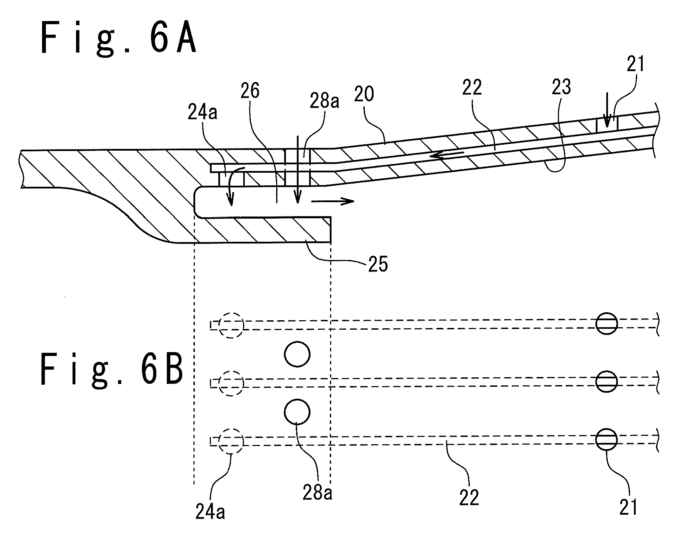

FIGS. 6A and 6B show a modification of the second example. This modification differs from FIGS. 5A and 5B in that auxiliary coolant supply openings 28a are provided downstream of coolant supply openings 24a. Even if the gas turbine combustor is configured as shown in FIGS. 6A and 6B, the same advantages as those of the second example can be obtained.

### [First Embodiment]

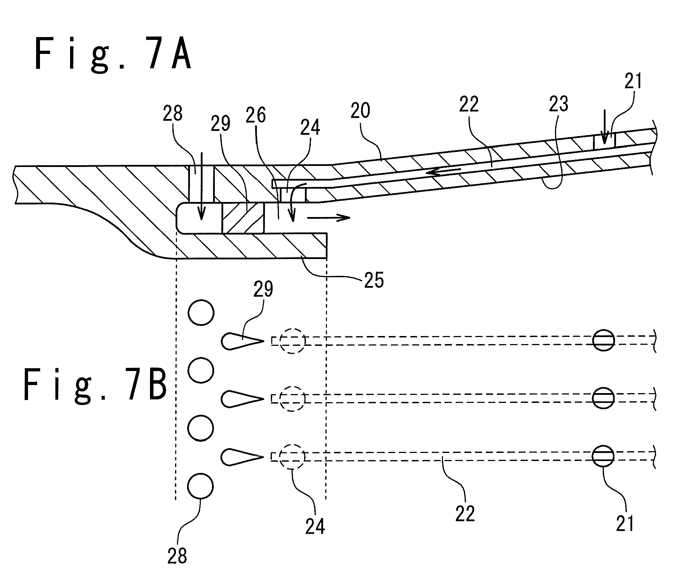

The gas turbine combustor according to a first embodiment of the present invention differs from that of the second example in a configuration that a spacer member is provided between a wall surface of the combustion tube 2 and the guide 25. FIGS. 7A and 7B show the configuration. FIG. 7A is a cross sectional view. FIG. 7B is a top view. A spacer 29 is provided between the guide 25 and the inner wall surface 23 opposed to the guide 25. Each spacer 29 shown in FIG. 7B has a teardrop cross section having a head upstream and a tail downstream. The spacers 29 keep the guide 25 to have a predetermined distance to the inner wall surface 23.

The coolant supply openings 24 are arranged downstream of the respective spacers 29. The auxiliary coolant supply openings 28 are arranged upstream of the respective spacers 29. "Upstream" and "downstream" are defined herein according to a main flow direction of coolant supplied from the auxiliary coolant supply openings 28 in the gap 26. The spacers 29 and the coolant supply openings 24 are arranged at positions staggered from the auxiliary coolant supply openings 28 by a half-pitch in a direction perpendicular to a flow direction of cooling air supplied from the auxiliary coolant supply openings 28.

During operation of the gas turbine, the spacers 29 keep a slot height of a gap 25 constant. The compressed air of the wheel chamber is supplied to the gap 26 from the auxiliary coolant supply openings 28. The guide 25 introduces the supplied air into a region along the inner wall surface 23. Auxiliary film air formed by the auxiliary coolant supply openings 28 has a low flow rate on a downstream side of the spacers 29. Film air formed by the air supplied from the coolant supply openings 24 and direction-changed by the guide 25 is supplied to a region downstream of the spacers 29. By this configuration, uniform film air can be formed even if the spacers 29 keeping a slot height of the gap 26 constant are provided.

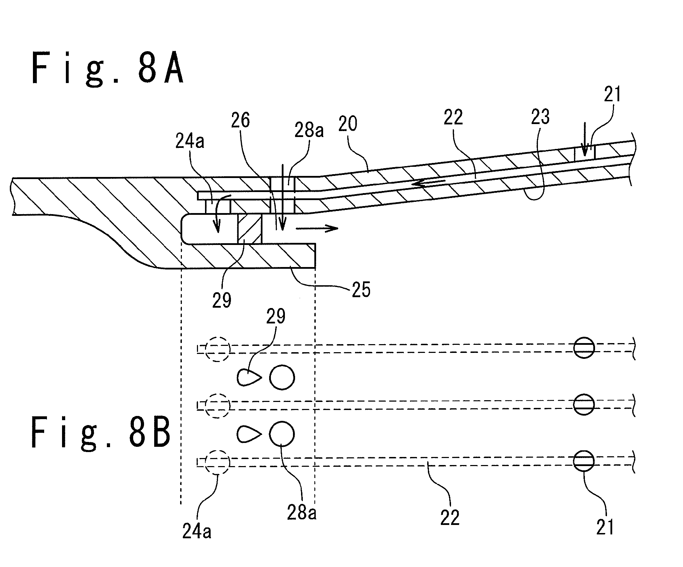

In a modification of the first embodiment, the same advantages can be obtained by arranging the coolant supply openings 24 and the auxiliary coolant supply openings 28 at opposite positions to those according to the first embodiment. The gas turbine combustor according to the modification of the first embodiment is configured so that the spacers 29 are arranged between the coolant supply openings 24a and the auxiliary coolant supply openings 28a shown in FIGS. 6A and 6B. FIG. 8A is a cross sectional view of the gas turbine combustor and FIG. 8B is a top view thereof. In this modification, the spacers 29 are arranged at positions staggered by a half-pitch from the coolant supply openings 24a formed upstream of the spacers 29 in a direction perpendicular to a flow direction of the air to be introduced from the coolant supply openings 24a to be introduced downstream by the guide 25.

It is preferable to arrange the spacers 29 at positions close to a downstream end of the gap 26 so that the spacers 29 can keep a slot height of the gap 26 constant. Thus, the gas turbine combustor is preferably configured so that either the auxiliary coolant supply openings 28 (corresponding to the first embodiment) or the coolant supply openings 24a (corresponding to the modification of the first embodiment) are arranged upstream of the spacers 29.

### [Third Example]

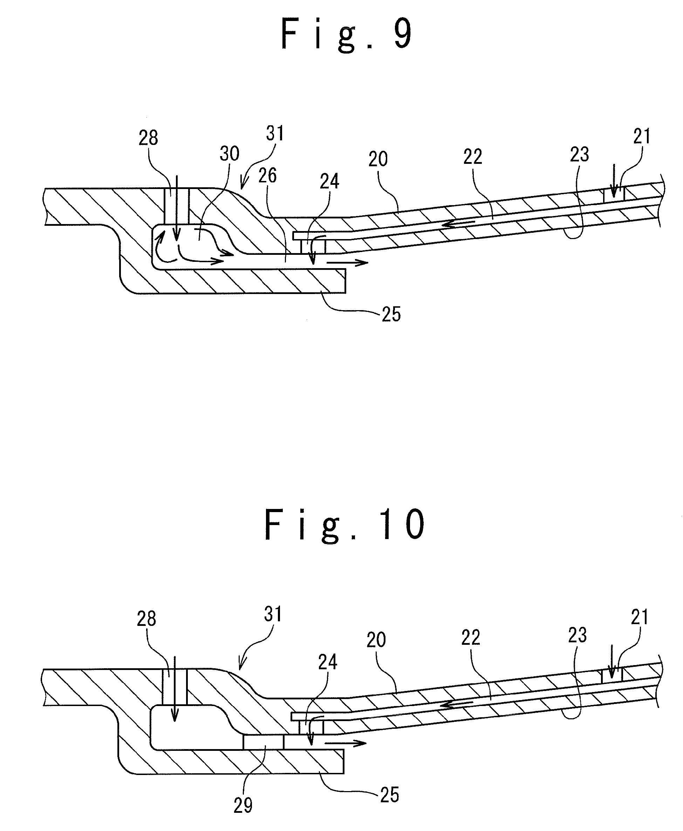

The gas turbine combustor according to a third example serving to explain features of the present invention differs from that of the second example in that the gas turbine combustor includes a cavity for reducing a flow rate of auxiliary coolant directly supplied from the wheel chamber. FIG. 9 is a cross sectional view of the gas turbine configured as stated above. A tube wall of the combustion tube 2 includes a bulge section 31. The bulge section 31 is formed upstream of a predetermined position in a main flow direction of cooling air or fuel. In the bulge section 31, the combustion tube 2 projects to an opposite side to the combustion zone 8, that is, projects to the wheel chamber 4. The guide 25 is substantially flat in the main flow direction near the predetermined position, that is, both upstream and downstream of the predetermined position. A region between the inner wall surface 23 and the guide 25 in the projecting region forms a cavity 30. A cross sectional area of the cavity 30 perpendicular to the flow direction in the gap 26 is larger than that of the gap 26.

Both of the air supplied from the coolant supply openings 24 and the air supplied from the auxiliary coolant supply openings 28 are supplied by using a pressure difference between the wheel chamber 4 and the combustion zone 8. A flow rate of the air supplied from the coolant supply openings 24 is low since the air passes through the cooling passages 22. On the other hand, a flow rate of the air supplied from the auxiliary coolant supply openings 28 is high since the air is directly supplied from the wheel chamber 4. As a result, the air supplied as a film has a flow rate variation. By providing the cavity 30, it is possible to reduce the flow rate of the air supplied from the auxiliary coolant supply openings 28 and form a uniform film air.

FIG. 10 shows an embodiment which is a modification of the third example. The spacers 29 similar to those according to the first embodiment are provided between a wall surface of the combustion tube 2 and the guide 25. Each spacer 29 is provided in a region downstream of the cavity 30, in which the gap 26 is narrow and which is upstream of the coolant supply openings 24. The spacers 29 are provided at positions staggered by a half-pitch from the coolant supply openings 24 in a direction perpendicular to a flow of cooling air.

## Claims

1. A gas turbine combustor (1) comprising:
a combustion tube (2) which has an inner wall surface (23) faced to a combustion zone (8) and an outer wall surface (20),
wherein a plurality of cooling passages (22) are formed between the inner wall surface (23) and the outer wall surface (20), said plurality of cooling passages (22) having a plurality of main coolant supply openings (24;24a) on said inner wall surface (23);
a guide (25) configured to guide coolant supplied, in operation, from said plurality of main coolant supply openings (24;24a) into a direction along said inner wall surface (23);
a plurality of auxiliary coolant supply openings (28;28a) configured to supply coolant from a region outside said outer wall surface (20) to a gap (26) between said inner wall surface (23) and said guide (25) such that coolant which is introduced from said plurality of auxiliary coolant supply openings (28;28a) is guided to the direction along said inner wall surface (23) by said guide (25);
wherein said plurality of main coolant supply openings (24;24a) and said plurality of auxiliary coolant supply openings (28;28a) are formed at positions such that the main coolant supply openings (24;24a) and the auxiliary coolant supply openings (28;28a) are shifted with respect to each other in the direction of flow of the coolant guided by said guide (25), **characterized in that**, spacers (29)are configured to keep said gap (26)at a predetermined width and
wherein said spacers (29) are arranged between said main coolant supply openings (24;24a) and said auxiliary coolant supply openings (28;28a) such that the coolant can pass through between said spacers (29).

2. The gas turbine combustor (1) according to claim 1, wherein said guide (25) is arranged to introduce the coolant in a downstream direction from a position at which a nozzle (14) is provided to supply a fuel to a tail tube (3) connected with said combustion tube (2) on the central axis (19) of said combustion tube (2).

3. The gas turbine combustor (1) according to claim 2, wherein said plurality of main coolant supply openings (24;24a) are arranged to supply the coolant toward an inside of said combustion tube (2) in a radial direction.

4. The gas turbine combustor (1) according to any of claims 1 to 3, wherein said plurality of main coolant supply openings (24;24a) are provided near downstream ends of said plurality of cooling passages (22) through which said coolant flows in operation.

5. The gas turbine combustor (1) according to any one of claims 1 to 4,
wherein said spacers (29) are arranged downstream of said plurality of auxiliary coolant supply openings (28) in the direction of flow of the coolant which is supplied in operation from said plurality of auxiliary coolant supply openings (28), and
said plurality of main coolant supply openings (24) are arranged downstream of said spacers.

6. The gas turbine combustor (1) according to any one of claims 1 to 4,
wherein said spacers (29) are arranged downstream of said plurality of main coolant supply openings (24a) in a direction of flow of the coolant which is supplied in operation from said plurality of main coolant supply openings (24a), and
said plurality of auxiliary coolant supply openings (28a) are arranged downstream of said spacers (29).

7. The gas turbine combustor (1) according to any one of claims 1 to 5, wherein
said combustion tube (2) has a bulge section (31),
said bulge section (31) is provided upstream of a predetermined position which is upstream of said plurality of main coolant supply openings (24) in a direction of a main flow of fuel in the combustion zone (8), said bulge section (31) extending in a direction opposite to the combustion zone (8),
a cavity (30) is formed in a region between said inner wall surface (23) and said guide (25) in said bulge section (31), wherein said plurality of auxiliary coolant supply openings (28) are opened to said cavity (30),
wherein the arrangement of said cavity (30) and of said gap (26) is such that the coolant supplied from said auxiliary coolant supply openings (28) is supplied to said gap (26) through said cavity (30), and such that a flow rate of the coolant in said cavity (30) is slower than a flow rate of said coolant in said gap (26).

8. The gas turbine combustor (1) according to claim 7, wherein
said guide (25) is substantially flat in the main flow direction near the predetermined position, and
said gap (26) is formed in a region between said inner wall surface (23) and said guide (25) downstream of the predetermined position in the main flow direction.

9. The gas turbine combustor (1) according to any one of claims 1 to 8, wherein relations Δ < d and D > d are satisfied where Δ is a height of the gap between said guide (25) and the inner wall surface (23), d is the diameter of the main coolant supply openings (24;24a) respectively formed as a circle, and D is a length from a downstream end of the main coolant supply openings (24;24a) to a downstream end of the guide (25) in a direction parallel to a central axis (19) of said combustion tube (2).

## Patentansprüche

1. Eine Gasturbinenbrennkammer (1) mit:
einem Verbrennungsrohr (2), das eine Innenwandfläche (23), die einer Verbrennungszone (8) zugewandt ist, und eine Außenwandfläche (20) besitzt,
wobei eine Vielzahl von Kühldurchgängen (22) zwischen der Innenwandfläche (23) und der Außenwandfläche (20) ausgebildet sind, wobei die Vielzahl von Kühldurchgängen (22) eine Vielzahl von Haupt-Kühlmittelzuführöffnungen (24;24a) an der Innenwandfläche (23) besitzen,
einer Führung (25), die ausgestaltet ist, um im Betrieb zugeführtes Kühlmittel von der Vielzahl von Haupt-Kühlmittelzuführöffnungen (24;24a) in eine Richtung entlang der Innenwandfläche (23) zu leiten,
einer Vielzahl von Hilfs-Kühlmittelzuführöffnungen (28;28a), die konfiguriert sind, um Kühlmittel von einer Region außenseitig der Außenwandfläche (20) zu einem Zwischenraum (26) zwischen der Innenwandfläche (23) und der Führung (25) so zuzuführen, dass Kühlmittel, das von der Vielzahl von Hilfs-Kühlmittelzuführöffnungen (28;28a) eingebracht wird, in der Richtung entlang der Innenwandfläche (23) durch die Führung (25) geleitet wird,
wobei die Vielzahl von Haupt-Kühlmittelzuführöffnungen (24;24a) und die Vielzahl von Hilfs-Kühlmittelzuführöffnungen (28;28a) an Positionen so ausgebildet sind, dass die Haupt-Kühlmittelzuführöffnungen (24;24a) und die Hilfs-Kühlmittelzuführöffnungen (28;28a) relativ zueinander in der Strömungsrichtung des durch die Führung (25) geleiteten Kühlmittels versetzt sind,
**dadurch gekennzeichnet, dass** Abstandhalter (29) ausgestaltet sind, um den Zwischenraum (26) bei einer vorbestimmten Weite zu halten, und wobei die Abstandhalter (29) zwischen den Haupt-Kühlmittelzuführöffnungen (24;24a) zu den Hilfs-Kühlmittelzuführöffnungen (28;28a) so angeordnet sind, dass das Kühlmittel zwischen den Abstandhaltern (29) hindurchtreten kann.

2. Die Gasturbinenbrennkammer (1) gemäß Anspruch 1, wobei die Führung (25) angeordnet ist, um das Kühlmittel in einer Stromabrichtung von einer Position einzubringen, an der eine Düse (14) vorgesehen ist, um einen Brennstoff zu einem Tail- bzw. Auslaufrohr (3) zuzuführen, das mit dem Verbrennungsrohr (2) an der Mittelachse (19) des Verbrennungsrohr (2) verbunden ist.

3. Die Gasturbinenbrennkammer (1) gemäß Anspruch 2, wobei die Vielzahl von Haupt-Kühlmittelzuführöffnungen (24;24a) angeordnet sind, um das Kühlmittel zu einer Innenseite des Verbrennungsrohrs (2) in einer Radialrichtung zuzuführen.

4. Die Gasturbinenbrennkammer (1) gemäß einem der Ansprüche 1 bis 3, wobei die Vielzahl von Haupt-Kühlmittelzuführöffnungen (24;24a) nahe stromabwärtigen Enden der Vielzahl von Kühlmitteldurchgängen (22) vorgesehen sind, durch welche das Kühlmittel im Betrieb strömt.

5. Die Gasturbinenbrennkammer (1) gemäß einem der Ansprüche 1 bis 4,
wobei die Abstandhalter (29) stromab der Vielzahl von Hilfs-Kühlmittelzuführöffnungen (28) in der Richtung der Strömung des Kühlmittels angeordnet sind, welches im Betrieb von der Vielzahl von Hilfs-Kühlmittelzuführöffnungen (28) zugeführt wird, und
die Vielzahl von Haupt-Kühlmittelzuführöffnungen (24) stromab den Abstandhaltern angeordnet sind.

6. Die Gasturbinenbrennkammer (1) gemäß einem der Ansprüche 1 bis 4,
wobei die Abstandhalter (29) stromab der Vielzahl von Haupt-Kühlmittelzuführöffnungen (24a) in einer Strömungsrichtung des Kühlmittels angeordnet sind, welches im Betrieb von der Vielzahl von Haupt-Kühlmittelzuführöffnungen (24a) zugeführt wird, und
die Vielzahl von Hilfs-Kühlmittelzuführöffnungen (28a) stromab den Abstandhaltern (29) angeordnet sind.

7. Die Gasturbinenbrennkammer (1) gemäß einem der Ansprüche 1 bis 5, wobei
das Verbrennungsrohr (2) einen Ausbauchungsabschnitt (31) besitzt,
wobei der Ausbauchungsabschnitt (31) stromauf einer vorbestimmten Position vorgesehen ist, welche sich stromauf der Vielzahl von Haupt-Kühlmittelzuführöffnungen (24) in einer Richtung einer Hauptströmung von Brennstoff in der Verbrennungszone (8) befindet, wobei der Ausbauchungsabschnitt (31) sich in einer Richtung entgegengesetzt zu der Verbrennungszone (8) erstreckt,
ein Hohlraum (30) in einer Region zwischen der Innenwandfläche (23) und der Führung (25) in dem Ausbauchungsabschnitt (31) ausgebildet ist, wobei die Vielzahl von Hilfs-Kühlmittelzuführöffnungen (28) zu dem Hohlraum (30) geöffnet sind,
wobei die Anordnung des Hohlraums (30) und des Zwischenraums (26) so ist, dass das von den Hilfs-Kühlmittelzuführöffnungen (28) zugeführte Kühlmittel zu dem Zwischenraum (26) durch den Hohlraum (30) zugeführt wird, und so, dass eine Strömungsrate des Kühlmittels in dem Hohlraum (30) niedriger bzw. langsamer ist als eine Strömungsrate des Kühlmittels in dem Zwischenraum (26).

8. Die Gasturbinenbrennkammer (1) gemäß Anspruch 7, wobei
die Führung (25) im Wesentlichen flach in der Hauptströmungsrichtung nahe der vorbestimmten Position ist, und
der Zwischenraum (26) in einer Region zwischen der Innenwandfläche (23) und der Führung (25) stromab der vorbestimmten Position in der Hauptströmungsrichtung ausgebildet ist.

9. Die Gasturbinenbrennkammer (1) gemäß einem der Ansprüche 1 bis 8, wobei Beziehungen Δ < d und D > d erfüllt sind, bei denen Δ eine Höhe des Zwischenraums zwischen der Führung (25) und der Innenwandfläche (23) ist, d der Durchmesser der Haupt-Kühlmittelzuführöffnungen (24;24a) ist, welche jeweils als ein Kreis ausgebildet sind, und D eine Länge von einem stromabwärtigen Ende der Haupt-Kühlmittelzuführöffnungen (24;24a) zu einem stromabwärtigen Ende der Führung (25) in einer Richtung parallel zu einer Mittelachse (19) des Verbrennungsrohrs (2) ist.

## Revendications

1. Chambre de combustion (1) de turbine à gaz, comprenant :
un tube (2) de combustion, qui a une surface (23) de paroi intérieure faisant face à une zone (8) de combustion et une surface (20) de paroi extérieure,
dans laquelle une pluralité de passages (22) de refroidissement sont formés entre la surface (23) de paroi intérieure et la surface (20) de paroi extérieure, la pluralité de passages (22) de refroidissement ayant une pluralité d'ouvertures (24; 24a) principales d'alimentation en réfrigérant sur la surface (23) de paroi intérieure ;
un guidage (25) configuré pour conduire du réfrigérant envoyé, en fonctionnement, à partir de la pluralité d'ouvertures (24; 24a) d'alimentation en réfrigérant dans une direction le long de la surface (23) de paroi intérieure ;
une pluralité d'ouvertures (28; 28a) d'alimentation en réfrigérant configurées pour envoyer du réfrigérant d'une région à l'extérieur de la surface (20) de paroi extérieure à un intervalle (26) entre la surface (23) de paroi intérieure et le guidage (25), de manière à ce que du réfrigérant, qui est introduit à partir de la pluralité d'ouvertures (28; 28a) auxiliaires d'alimentation en réfrigérant, soit conduit dans la direction le long de la surface (23) de paroi intérieure par le guidage (25) ;
dans laquelle la pluralité d'ouvertures (24; 24a) principales d'alimentation en réfrigérant et la pluralité d'ouvertures (28; 28a) auxiliaires d'alimentation en réfrigérant sont formées en des positions telles que les ouvertures (24; 24a) principales d'alimentation en réfrigérant et les ouvertures (28; 28a) auxiliaires d'alimentation en réfrigérant sont décalées les unes par rapport aux autres dans la direction d'écoulement du réfrigérant conduit par le guidage (25), **caractérisée en ce que** des entretoises (29) sont configurées pour maintenir l'intervalle (26) à une largeur déterminée à l'avance et
dans laquelle les entretoises (29) sont agencées entre les ouvertures (24; 24a) principales d'alimentation en réfrigérant et les ouvertures (28; 28a) auxiliaires d'alimentation en réfrigérant, de manière à ce que le réfrigérant puisse traverser entre les entretoises (29).

2. Chambre de combustion (1) de turbine à gaz suivant la revendication 1, dans laquelle le guidage (25) est agencé pour introduire le réfrigérant dans une direction en aval à partir d'une position où une buse (14) est prévue pour alimenter en combustible un tube (3) de queue communiquant avec le tube (2) de combustion sur l'axe (19) central du tube (2) de combustion.

3. Chambre de combustion (1) de turbine à gaz suivant la revendication 2, dans laquelle la pluralité d'ouvertures (24; 24a) principales d'alimentation en réfrigérant sont agencées pour envoyer le réfrigérant vers l'intérieur du tube (2) de combustion suivant une direction radiale.

4. Chambre de combustion (1) de turbine à gaz suivant l'une quelconque des revendications 1 à 3, dans laquelle la pluralité d'ouvertures (24; 24a) principales d'alimentation en réfrigérant sont prévues près des extrémités en aval de la pluralité de passages (22) de refroidissement, par lesquels le réfrigérant s'écoule en fonctionnement.

5. Chambre de combustion (1) de turbine à gaz suivant l'une quelconque des revendications 1 à 4,
dans laquelle les entretoises (29) sont agencées en aval de la pluralité d'ouvertures (28) auxiliaires d'alimentation en réfrigérant dans la direction d'écoulement du réfrigérant, qui est envoyé en fonctionnement à partir de la pluralité d'ouvertures (28) auxiliaires d'alimentation en réfrigérant,
la pluralité d'ouvertures (24) principales d'alimentation en réfrigérant sont agencées en aval des entretoises.

6. Chambre de combustion (1) de turbine à gaz suivant l'une quelconque des revendications 1 à 4,
dans laquelle les entretoises (29) sont agencées en aval de la pluralité d'ouvertures (24a) principales d'alimentation en réfrigérant dans une direction d'écoulement du réfrigérant, qui est envoyé en fonctionnement à partir de la pluralité d'ouvertures (24a) principales d'alimentation en réfrigérant et
la pluralité d'ouvertures (28a) auxiliaires d'alimentation en réfrigérant sont agencées en aval des entretoises (29).

7. Chambre de combustion (1) de turbine à gaz suivant l'une quelconque des revendications 1 à 5, dans laquelle
le tube (2) de combustion a un tronçon (31) bombé,
le tronçon (31) bombé est prévu en amont d'une position déterminée à l'avance, qui est en amont de la pluralité d'ouvertures (24) principales d'alimentation en réfrigérant dans une direction d'un écoulement principal de combustible dans la zone (8) de combustion, le tronçon (31) bombé s'étendant dans un sens opposé à la zone (8) de combustion,
une cavité (30) est formée dans une région entre la surface (23) de paroi intérieure et le guidage (25) dans le tronçon (31) bombé, la pluralité d'ouvertures (28) auxiliaires d'alimentation en réfrigérant débouchant sur la cavité (30),
dans laquelle l'agencement de la cavité (30) et de l'intervalle (26) est tel que le réfrigérant envoyé à partir des ouvertures (28) auxiliaires d'alimentation en réfrigérant est envoyé à l'intervalle (26) en passant par la cavité (30) et de manière à ce qu'un débit du réfrigérant dans la cavité (30) soit plus ralenti qu'un débit du réfrigérant dans l'intervalle (26).

8. Chambre de combustion (1) de turbine à gaz suivant la revendication 7, dans laquelle
le guidage (25) est sensiblement plat dans la direction principale d'écoulement près de la position déterminée à l'avance et
l'intervalle (26) est formée dans une région entre la surface (23) de paroi intérieure et le guidage (25) en aval de la position déterminée à l'avance dans la direction d'écoulement principal.

9. Chambre de combustion (1) de turbine à gaz suivant l'une quelconque des revendications 1 à 8, dans laquelle des relations Δ < d et D > d sont satisfaites lorsque Δ est une hauteur de l'intervalle entre le guidage (25) et la surface (23) de paroi intérieure, d est le diamètre des ouvertures (24; 24a) principales d'alimentation en réfrigérant formées respectivement sous la forme d'un cercle et D est une longueur d'une extrémité en aval des ouvertures (24; 24a) principales d'alimentation en réfrigérant à une extrémité en aval du guidage (25) dans une direction parallèle à un axe (19) central du tube (2) de combustion.
